# EUROPÄISCHE PATENTANMELDUNG

(11) **EP 0 617 994 A1**
(43) Veröffentlichungstag der Anmeldung: **05.10.1994**
(21) Anmeldenummer: 94103966.1
(22) Anmeldetag: 15.03.1994
(51) Int. Cl.: B01D 45/08

(54) **Verfahren und Vorrichtung zum Reinigen von gasförmigen Fluiden**

(30) Priorität: 22.03.1993 DE 9304232 U
(71) Anmelder: Gutermuth Patent GmbH & Co. KG, D-63505 Langenselbold (DE)
(72) Erfinder: Gutermuth, Paul, D-63505 Langenselbold (DE)
(74) Vertreter: Stoffregen, Hans-Herbert, Dr. Dipl.-Phys.

(57) **Zusammenfassung**

Die Erfindung bezieht sich auf ein Verfahren und eine Vorrichtung zum Reinigen von gasförmigen Fluiden durch Abscheiden von in diesen vorhandenen Medien wie Ölen und in diesen vorhandenen Schmutzpartikeln. Um einerseits die Abscheiderfläche (14, 16, 18, 20) problemlos reinigen zu können und andererseits den Abscheidegrad zu erhöhen, wird vorgeschlagen, daß das zu reinigende gasförmige Fluid vor Durchdringen der Abscheiderfläche (14, 16, 18, 20) abgekühlt und/oder in das Fluid ein Gas oder eine Flüssigkeit versprüht wird.

## Beschreibung

Die Erfindung bezieht sich auf ein Verfahren und eine Vorrichtung zum Reinigen von Gasen durch Abscheiden von in diesen vorhandenen Schmutzpartikeln oder Fluiden wie Ölen, umfassend zur Bildung zumindest einer Abscheiderfläche zumindest in zwei gegenüberliegenden Reihen angeordnete im Querschnitt offene rinnenförmige erste und zweite Profilteile, wobei vorzugsweise die freien Längskanten der Ränder der ersten Profilteile die freien Längskanten der Ränder der zweiten Profilteile überlappen sowie von den Innenflächen der Profilteile in Längsrichtung verlaufende Vorsprünge ausgehen. Dabei kann die Vorrichtung einen Abfluß für von einer Reinigungseinrichtung abgegebenes Reinigungsfluid umfassen.

Eine entsprechende Vorrichtung ist der EP 0 306 807 B1 zu entnehmen. Bei dieser Vorrichtung ist die Möglichkeit einer einfachen Reinigung der Abscheiderflächen bzw. der diese bildenden Elemente dann möglich, wenn die Vorrichtung leicht zugänglich ist. So kann ein Hochdruckreinigungsgerät benutzt werden, um Reinigungsfluid auf die Abscheiderfläche abzustrahlen. Dadurch, daß die Profilelemente leicht entfernbar sind, können auch die von außen nicht zugänglichen Profilelemente ohne Schwierigkeiten gereinigt werden. Allerdings ist es erforderlich, daß beim Reinigen der Abluftstrom unterbrochen wird. Folglich muß die die Vorrichtung umfassende Lüftungsanlage außer Betrieb gesetzt werden.

Ein Reinigen kann jedoch dann Probleme bereiten, wenn die Vorrichtung selbst nicht leicht zuganglich sein sollte. Da als Reinigungsflüssigkeiten nur solche benutzt werden, die von einem Hochdruckreinigungsgerät abgegeben werden können, die abgeschiedenen Fluide wie Ölnebel jedoch aufbereitet werden sollen, muß darauf geachtet werden, daß die Reinigungsflüssigkeit selbst nicht in die die abgeschiedenen Fluide aufnehmenden Sammelbehälter gelangt.

Aufgabe der vorliegenden Erfindung ist es unter anderem, ein Verfahren und eine Vorrichtung der zuvor beschriebenen Art so weiterzubilden, daß unabhängig vom Ort der Installation der Vorrichtung ein problemloses Reinigen der Profilelemente erfolgen soll. Es ist jedoch auch Aufgabe der vorliegenden Erfindung, mit einfachen Maßnahmen sicherzustellen, daß ein Aufbereiten der abgeschiedenen Fluide durch die Reinigungsflüssigkeit selbst nicht beeinträchtigt wird. Ferner soll ein Reinigen erfolgen können, ohne daß die die Vorrichtung enthaltende Entlüftungsanlage außer Betrieb gesetzt werden muß, d.h., daß der Abscheider während des Reinigens in Betrieb bleibt. Insbesondere soll jedoch eine Erhöhung des Abscheidegrades erfolgen, wobei gegebenenfalls gleichzeitig ein Abreinigen der Abscheidefläche möglich sein soll.

Verfahrensmäßig wird die Aufgabe im wesentlichen dadurch gelöst, daß das zu reinigende gasförmige Fluid vor Durchdringen der Abscheiderfläche abgekühlt und/oder in das Fluid Flüssigkeit versprüht wird. Dabei wird das Fluid durch Gas bzw. Luft einer Temperatur abgekühlt, die niedriger als die des Fluids ist.

Durch die erfindungsgemäßen Maßnahmen erfolgt quasi eine Keimbildung von den abzuscheidenden Partikeln in dem die Abscheiderfläche durchströmenden Gasstrom durch das Versprühen von Kühlluft bzw. Flüssigkeit. Hierdurch werden größere Mengen an flüssigen Medien an den Profilelementen selbst abgeschieden, wodurch wiederum ein Reinigungseffekt hervorgerufen wird. Dies ist insbesondere dann der Fall, wenn in das zu reinigende Gas Flüssigkeit versprüht wird, dessen Sprührichtung der des zu reinigenden Fluids entgegengerichtet ist.

Mit anderen Worten wird die Flüssigkeit bzw. die Luft, die zum zusätzlichen "Kondensieren" von Partikeln bzw. zum Reinigen der die Abscheiderfläche bildenden Profilelemente dienen, im Gegenstrom den zu reinigenden gasförmigen Fluiden zugeführt.

Insbesondere ist vorgesehen, daß als zu versprühende Flüssigkeit eine solche verwendet wird, die von der Abscheiderfläche abgeschiedene flüssige Fluide sind oder enthalten. Hierdurch ist sichergestellt, daß das Aufbereiten bzw. Entsorgen der abgeschiedenen Fluide wie z.B. Oel durch die versprühte Flüssigkeit wie Kondensier- bzw. Reinigungsflüssigkeit nicht beeinträchtigt wird. Auch durch diese Maßnahme wird erkennbar, daß der gewünschte Reinigungseffekt während des Durchströmens der Fluide durch den Abscheider erreicht werden kann, so daß eine Unterbrechung der den Abscheider enthaltenden Lüftungsanlage nicht notwendig wird.

Vorrichtungsmäßig wird die Aufgabe dadurch gelöst, daß die Vorrichtung zumindest eine zur Keimbildung von Schmutzpartikeltröpfchen und/oder Reinigung der Abscheiderfläche bestimmte gasförmige und/oder flüssige Medien abgebende Sprüheinrichtung aufweist, die vorzugsweise zumindest eine Düse umfasst, die im Gegenstrom zu dem der Vorrichtung zugeführten zu reinigenden gasförmigen Fluid Flüssigkeit und/oder Gas wie gekühltes Gas versprüht.

Dabei ist insbesondere die versprühte Flüssigkeit, die einerseits eine Keimbildung von abzuscheidenden Schmutzpartikeln bewirkt und andererseits durch Entlangströmen an den Profilteiloberflächen zu einer Reinigung dieser führt, in der Vorrichtung abgeschiedenes flüssiges Fluid. Dabei kann auch ein im Fluidstrom angeordneter Agglomerator mit Flüssigkeit befeuchtet werden, wodurch sich einerseits der Wirkungsgrad erhöht und andererseits sichergestellt ist, daß der Agglomerator nicht austrocknen kann.

Dadurch, daß als zu versprühendes flüssiges Fluid dasjenige benutzt wird, das auch aus dem zu reinigenden Gas abzuscheiden ist, kann das Reinigungs- bzw. Keimbildungsfluid sowie das abgeschiedene Fluid über eine gemeinsame Leitung einem Sammelbehälter zugeführt werden. Hierdurch ergeben sich konstruktive Vereinfachungen. Gleichzeitig wird der Anfall von zu entsorgendem Fluid stark reduziert.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden Ausführungsbeispiels.

Es zeigen:
- Fig. 1: eine Seitenansicht einer von einem Gehäuse aufgenommenen Vorrichtung zum Abscheiden von Fluiden mit weggelassenen Gehäusewandungen,
- Fig. 2: die Vorrichtung nach Fig. 1 in Vorderansicht,
- Fig. 3: eine Prinzipdarstellung einer weiteren Ausführungsform einer Vorrichtung zum Abscheiden von Fluiden und
- Fig. 4: eine Prinzipdarstellung einer Abscheideranordnung mit Agglomerator.

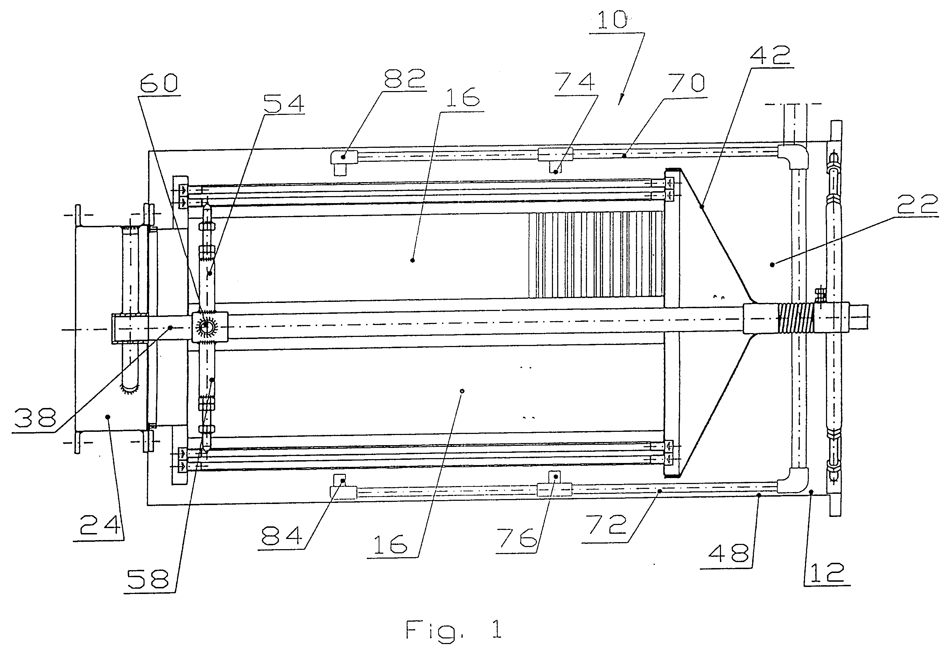

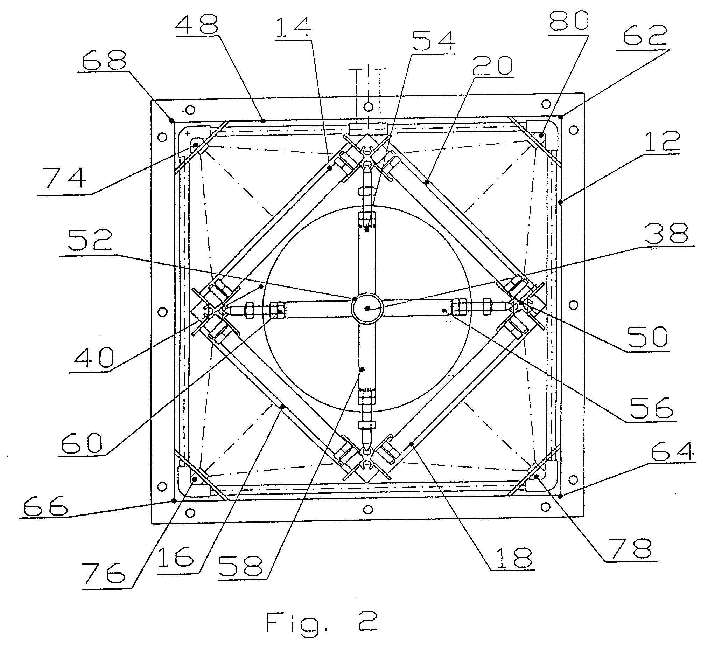

In den Fig. 1 und 2 ist eine Vorrichtung (10) zum Reinigen von gasförmigen Fluiden bzw. zum Abscheiden von in diesen vorhandenen flüssigen Fluiden wie Ölen und in diesen vorhandenen Schmutzpartikeln dargestellt, die ein Gehäuse (12) und in diesem angeordnete Abscheiderflächen (14), (16), (18) und (20) umfaßt. Das Gehäuse (12) ist stirnseitig offen und weist eine Eintrittsöffnung (22) sowie eine als Stutzen ausgebildete Austrittsöffnung (24) auf. Die Stirnränder des Gehäuses (12) bzw. des Stutzens (24) haben nicht näher bezeichnete Flansche, um z.B. in ein bestehendes Entlüftungssystem wie Entlüftungskanal eingebaut zu werden.

Die Abscheiderflächen (14), (16), (18) und (20) bestehen aus in Reihen angeordneten, im Querschnitt offenen, rinnenförmigen ersten und zweiten Profilteilen, wobei vorzugsweise die freien Längskanten der Ränder der ersten Profilteile die freien Längskanten der Ränder der zweiten Profilteile überlappen. Ferner können im Scheitelbereich der Innenflächen sich in Richtung der Profilteilöffnungen und entlang ihrer Längsachsen verlaufende Vorsprünge vorhanden sein, wodurch zum einen die Fluidströmungsgeschwindigkeit beeinflussende zusätzliche Kammern ausgebildet und zum anderen Befestigungen für Halterungen zur Verfügung gestellt werden, um die Einzelprofilteile lösbar, jedoch positionsgenau aufzunehmen.

Mit anderen Worten weisen die in Reihen angeordneten Profilteile, die die Abscheiderflächen (14), (16), (18) und (20) bilden, eine Konstruktion auf, wie diese z.B. der EP 0 206 204 B1 und dort insbesondere den Fig. 1 und 2 zu entnehmen ist. Ungeachtet dieser speziellen Ausführungsform stellt die EP 0 206 204 B1 genauso wie die EP 0 306 807 B1 oder die EP 0 280 160 A1 eine ergänzende Offenbarung zu der vorliegenden Beschreibung dar.

Um sicherzustellen, daß die Abscheiderflächen (14), (16), (18) und (20) nicht umströmt, also umgangen werden können, ist der von den Abscheiderflächen (14), (16), (18) und (20) umfaßte Innenraum (40) von einem Anströmelement wie Anströmkonus (42) abgedeckt, wodurch die zu reinigenden Fluide zunächst entlang der Innenwandung (48) des Gehäuses (12) geführt werden und dann durch die von den Profilteilen gebildeten Abscheiderflächen (14), (16), (18) und (20) strömen. Die sodann gereinigten Fluide gelangen in den Innenraum (40), um anschließend über den Austrittsstutzen (24) aus dem Gehäuse (12) auszutreten.

Die Profilteile werden in nicht näher bezeichneten Aufnahmeteilen wie Rahmen befestigt, die die äußere Begrenzung der Abscheiderflächen (14), (16), (18) und (20) bilden. Die aneinandergrenzenden Kanten bilden dann quasi eine Sammelrinne (50), um in den Abscheiderflächen abgeschiedene Medien wie z.B. Öl, die aufgrund der Schwerkraft zu der Sammelrinne (50) fließen, zu sammeln und anschließend einer nicht dargestellten Ableitung zuzuführen, die ihrerseits in einem Auffangbehälter mündet. Die in dem Auffangbehälter gesammelten Fluide können sodann gereinigt werden, so daß der Anfall von zu entsorgenden Stoffen stark reduziert werden kann.

Die Abscheiderflächen (14), (16), (18) und (20) sind mit ihren nicht näher bezeichneten, die Halterungen für die Profilteile aufnehmenden Aufnahmeteilen wie Profilleisten mit einem koaxial zur Längsachse (38) des Gehäuses (12) verlaufenden Stützrohr (52) verbunden, das seinerseits drehbar über Abstützungen (54), (56), (58) und (60) zentrierbar an der Gehäuseinnenwandung, und zwar im Mittenbereich der Gehäuseflächen, abgestützt ist.

Um die die Abscheiderflächen (14), (16), (18) und (20) bildenden Profilteile reinigen zu können, ohne daß einerseits eine Unterbrechung des Betriebes erforderlich ist und andererseits eine Demontage oder ein Öffnen eines vorhandenen Revisionsdeckels erforderlich ist und ohne daß ein gesondertes Hochdruckreinigungsgerät benutzt werden muß, ist erfindungsgemäß vorgesehen, daß entlang der Ecken (62), (64), (66) und (68) des Gehäuses (12) Leitungen (70) und (72) verlaufen, von denen Düsen (74), (76), (78), (80), (82) und (84) ausgehen, über die Reinigungsfluide auf die Abscheiderflächen (14), (16), (18) und (20) abgegeben werden.

Bei den Reinigungsfluiden handelt es sich dabei um Medien, die von den Abscheiderflächen (12), (14), (16) und (18) abgeschieden werden, jedoch in gereinigter Form. Hierdurch ergibt sich der Vorteil, daß die Reinigungsmedien zusammen mit den abgeschiedenen Medien über Sammelleitungen gemeinsam dem Auffangbehälter zugeführt werden können, um sodann ein Aufbereiten und Reinigen durchzuführen.

Hieraus ergibt sich nicht nur der Vorteil, daß ein Trennen von Reinigungsfluid und abgeschiedenen Medien nicht erforderlich ist, sondern auch, daß ein Reinigen der Abscheiderflächen auch während des Betriebes der erfindungsgemäßen Vorrichtung erfolgen kann. Zur Erhöhung der Effizienz der Reinigung kann dabei das Reinigungsfluid zuvor erwärmt worden sein.

Selbstverständlich besteht auch die Möglichkeit, in dem Gehäuse (12) nur eine Leitung mit Reinigungsdüsen anzuordnen, an denen dann die Abscheiderflächen (14), (16), (18) und (20) sukzessiv vorbeigeführt werden müßten. In diesem Fall wäre es jedoch erforderlich, daß der die Abscheiderflächen (14), (16), (18) und (20) bildende Körper drehbar gelagert ist. Bei Vorhandensein von Reinigungsdüsen entlang jeder Ecke des Gehäuses (12) ist dagegen eine drehbare Lagerung nicht erforderlich.

Um eine effizientere Reinigung zu ermöglichen, sollten die Abscheiderflächen (14), (16), (18) und (20) entsprechend der Darstellung gemäß Fig. 2 zu den Ecken (62), (64), (66), (68) und damit den Düsen (74), (76), (78) und (80) ausgerichtet sein, d.h., daß mittig von den Abscheiderflächen ausgehende Normale die Ecken (62), (64), (66) und (68) schneiden.

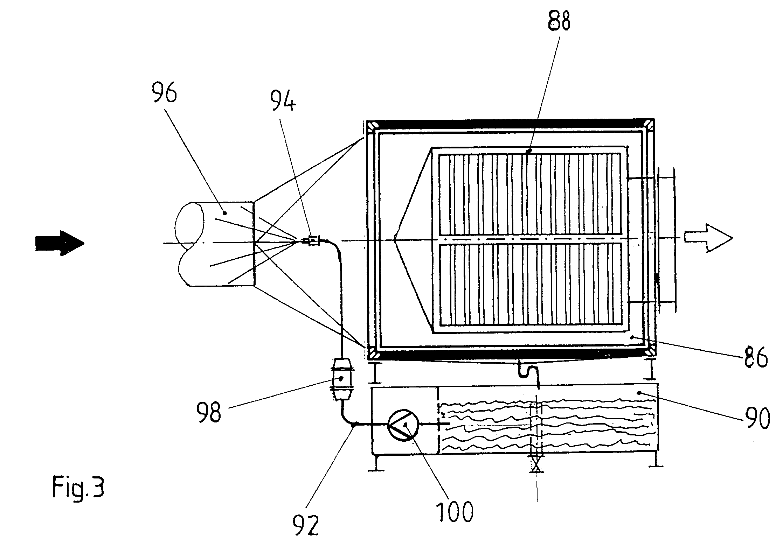

Der Fig. 3 ist eine bevorzugte Ausführungsform eines in einem Abluftkanal (86) angeordneten Abscheiders (88) eines Aufbaus zu entnehmen, der der Vorrichtung (10) gemäß der Fig. 1 und 2 entspricht.

Die von dem Abscheider (88) abgeschiedene Flüssigkeit wird dabei über eine im Bodenbereich des den Abscheider (88) aufnehmenden Gehäuses (86) verlaufende Sammelleitung einem Sammelbehälter (90) zugeführt, von der die Flüssigkeit in gewohnter Weise entnommen bzw. abgeleitet werden kann, um aufbereitet bzw. entsorgt zu werden.

Erfindungsgemäß geht von dem Sammelbehälter (90) eine Leitung (92) aus, die zu einer Sprüheinrichtung wie Düse (94) führt, die in den Zuluftkanal (96) angeordnet ist, durch die die zu reinigenden gasförmigen Fluide der Vorrichtung (88) zugeführt wird.

Über die Düse (94) kann nun abgeschiedene Flüssigkeit, gegebenenfalls nach Durchlaufen eines Filters (98) im Gegenstrom in das zu reinigende Gas versprüht werden. Hierdurch wird eine Keimbildung von den abzuscheidenden Schmutzpartikeln derart hervorgerufen, daß sich größere Tröpfchen bilden, an denen sich auch Schmutzpartikel anlagern können und die somit auf rein mechanischem Wege an den die Abscheiderflächen bildenden Profilteilen der Vorrichtung (88) abgeschieden werden.

Durch den erhöhten Flüssigkeitsanteil in den den Abscheider (88) durchströmenden Gasen erfolgt gleichzeitig eine Reinigung der Profilteile selbst, da aufgrund des erhöhten Flüssigkeitsanfalls ein Selbstreinigungseffekt auftritt.

Anstelle von zu versprühender Flüssigkeit kann in das zu reinigende Gas im Gegenstrom gekühltes Gas wie gekühlte Luft versprüht werden, wodurch eine Kondensatbildung der abzuscheidenden Partikel erfolgt. Dies bedeutet ebenfalls, daß einerseits der Abscheidegrad erhöht wird und andererseits aufgrund des erhöhten Flüssigkeitsanfalls eine Reinigung der Profilteile ermöglicht wird.

Um die Flüssigkeit bzw. das Gas im Gegenstrom zu versprühen, ist in der zu der Düse (94) wie Injektor führenden Leitung ein Förderaggregat wie eine Pumpe (100) angeordnet.

Selbstverständlich ist es nicht erforderlich, daß dem zu reinigenden Gas fortwährend Flüssigkeit bzw. gekühlte Luft zugeführt wird. Vielmehr kann dies auch intervallmäßig erfolgen.

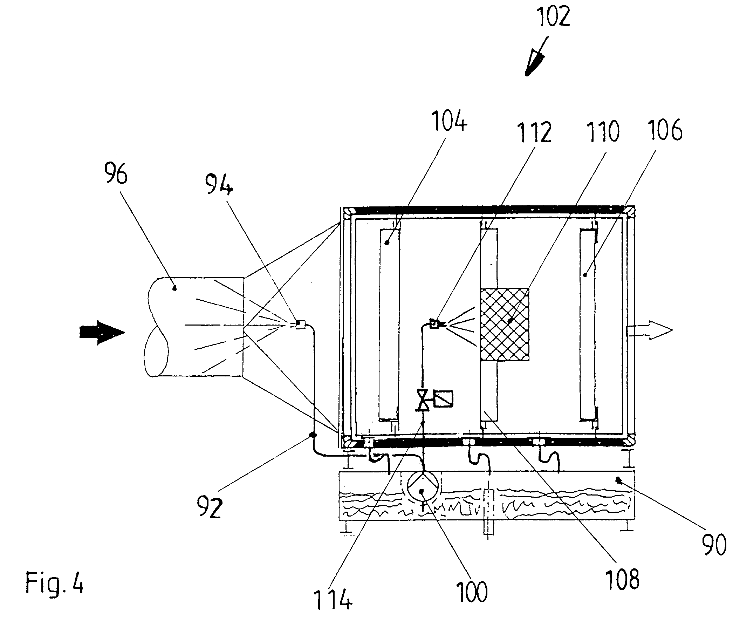

Der Fig. 4 ist eine weitere Ausführungsform einer Abscheideranordnung (102) zu entnehmen, die mehrere hintereinander angeordnete Abscheiderflächen (104), (106) und (108) umfasst. Dabei weisen die Abscheiderflächen (104), (106) und (108) einen Aufbau zurvor beschriebener Art auf. Unabhängig davon entspricht die Abscheideranordnung (102) vom Aufbau her der der EP 0 280 160 zu entnehmenden Abscheidervorrichtung, umfasst folglich einen Agglomerator (110), um insbesondere Kleinstpartikel mit abscheiden zu können.

Um den Agglomerator (110) zu reinigen bzw. anzufeuchten, damit dieser nicht austrocknen kann, ist eine Sprüheinrichtung (112) vorgesehen, die über eine Leitung (114) mit dem Sammelbehälter (90) verbunden ist. Durch die erfindungsgemäße Anordnung wird der Agglomerator (110) mit dem Medium besprüht, welches an den Abscheiderflächen (104), (106), (108) abgeschieden wird. Hierdurch ergibt sich erneut der Vorteil, daß trotz des Befeuchtens keine zusätzlich zu entsorgende Flüssigkeit anfällt.

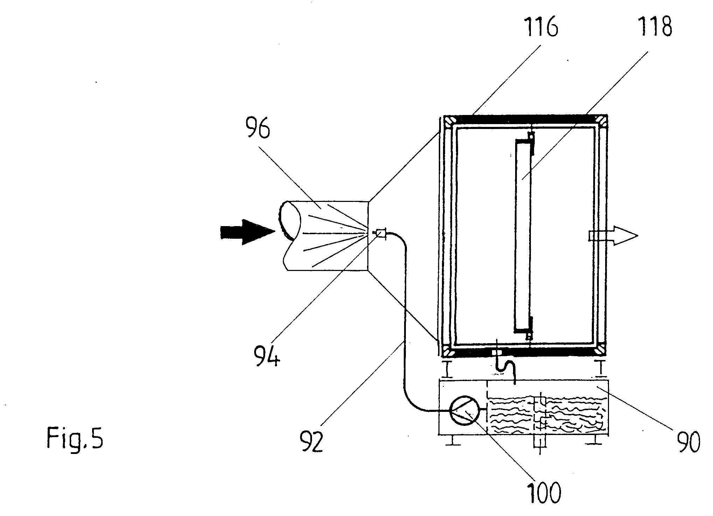

Die Fig. 5 stellt eine weitere Variante eines Abscheiders dar, bei dem in einem Gehäuse (116) eine Abscheiderfläche (118) angeordnet ist.

## Patentansprüche

1. Verfahren zum Reinigen von gasförmigen Fluiden durch Abscheiden von in diesen vorhandenen Medien wie Ölen und in diesen vorhandenen Schmutzpartikeln, umfassend zur Bildung zumindest einer Abscheiderfläche (14, 16, 18, 20) zumindest in zwei gegenüberliegenden Reihen angeordnete im Querschnitt offene rinnenförmige erste und zweite Profilteile, wobei vorzugsweise die freien Längskanten der Ränder der ersten Profilteile die freien Längskanten der Ränder der zweiten Profilteile überlappen sowie von den Innenflächen der Profilteile in Längsrichtung verlaufende Vorsprünge ausgehen,
**dadurch gekennzeichnet**,
daß das zu reinigende gasförmige Fluid vor Durchdringen der Abscheiderfläche (14, 16, 18, 20) abgekühlt und/oder in das Fluid ein Gas oder eine Flüssigkeit versprüht wird.

2. Verfahren nach Anspruch 1,
**dadurch gekennzeichnet**,
daß das zu reinigende gasförmige Fluid durch Gas bzw. Luft einer Temperatur abgekühlt wird, die niedriger als die des Fluids ist.

3. Verfahren nach Anspruch 1 oder 2,
**dadurch gekennzeichnet**,
daß die Flüssigkeit bzw. die Luft oder das Gas dem zu reinigenden gasförmigen Fluid im Gegenstrom zugeführt wird.

4. Verfahren nach zumindest einem der vorhergehenden Ansprüche,
**dadurch gekennzeichnet**,
daß als zu versprühende Flüssigkeit eine solche verwendet wird, die von der Abscheiderfläche (14, 16, 18, 20) abgeschiedene Flüssigkeit ist oder diese enthält.

5. Vorrichtung (10, 88) zum Reinigen von gasförmigen Fluiden durch Abscheiden von in diesen vorhandenen Medien wie Ölen und in diesen vorhandenen Schmutzpartikeln, umfassend zur Bildung zumindest einer Abscheiderfläche (14, 16, 18, 20) zumindest in zwei gegenüberliegenden Reihen angeordnete im Querschnitt offene rinnenförmige erste und zweite Profilteile, wobei vorzugsweise die freien Längskanten der Ränder der ersten Profilteile die freien Längskanten der Ränder der zweiten Profilteile überlappen sowie von den Innenflächen der Profilteile in Längsrichtung verlaufende Vorsprünge ausgehen, wobei die Vorrichtung einen Abfluß für von einer Reinigungseinrichtung (70, 72, 74, 76, 78, 80, 82, 84) abgegebenes Reinigungsfluid umfaßt,
**dadurch gekennzeichnet**,
daß die Vorrichtung (10, 88) zumindest eine ein zur Keimbildung von Schmutzpartikeltropfen und/oder Reinigung der Abscheiderfläche (14, 16, 18, 20) bestimmtes gasförmiges und/oder flüssiges Medium abgebende Sprüheinrichtung (94) aufweist.

6. Vorrichtung nach Anspruch 5,
**dadurch gekennzeichnet**,
daß die Sprüheinrichtung (94) zumindest eine Düse oder Injektor ist, die im Gegenstrom zu dem die Vorrichtung (10, 88) durchströmenden zu reinigenden gasförmigen Fluid die Flüssigkeit und/oder das Gas wie gekühltes Gas versprüht.

7. Vorrichtung nach zumindest einem der vorhergehenden Ansprüche,
**dadurch gekennzeichnet**,
daß die Sprüheinrichtung (70, 72, 74, 76, 78, 80, 82, 84) auf Abscheiderflächen (14, 16, 18, 20) ausgerichtete Düsen (74, 76, 78, 80, 82, 84) aufweist, die mittelbar oder unmittelbar von einem Rahmen bzw. Gehäuse (12) ausgehen, in dem die Vorrichtung in Form von einem geschlossenen Körper und Quader oder Vierkantsäule angeordnet und vorzugsweise drehbar gelagert ist.

8. Vorrichtung nach vorzugsweise einem der vorhergehenden Ansprüche,
**dadurch gekennzeichnet**,
daß die Flüssigkeit in der Vorrichtung (10) abgeschiedenes flüssiges Medium in gereinigter Form ist.

9. Vorrichtung nach zumindest einem der vorhergehenden Ansprüche,
**dadurch gekennzeichnet**,
daß die Vorrichtung (10, 88) mit einer abgeschiedene Flüssigkeit aufnehmenden Aufnahme (90) verbunden ist, von der eine zu der Sprüheinrichtung (94) führende Leitung (92) ausgeht.

10. Vorrichtung nach zumindest Anspruch 9,
**dadurch gekennzeichnet**,
daß in der Leitung (92) eine Filtereinrichtung (98) angeordnet ist.

11. Vorrichtung nach zumindest einem der vorhergehenden Ansprüche,
**dadurch gekennzeichnet**,
daß die Vorrichtung (102) einen Agglomerator (110) enthält, auf den eine mit von den Abscheiderflächen (104, 106, 108) abgeschiedener Flüssigkeit versorgte Sprüheinrichtung (112) ausgerichtet ist.
